Europäisches Patentamt

European Patent Office

Office européen des brevets

(11) Numéro de publication: **0 168 280**
**B1**

(12) **FASCICULE DE BREVET EUROPEEN**

(45) Date de publication du fascicule du brevet: **22.11.90**

(21) Numéro de dépôt: **85401082.4**

(22) Date de dépôt: **31.05.85**

(51) Int. Cl.⁵: **G 06 K 7/08,** G 06 K 13/07, G 06 K 17/00

(54) Dispositif de lecture de caractères magnétiques-optiques, avec possibilité d'impression et de mémorisation.

(30) Priorité: **08.06.84 FR 8409082**

(43) Date de publication de la demande: **15.01.86 Bulletin 86/03**

(45) Mention de la délivrance du brevet: **22.11.90 Bulletin 90/47**

(84) Etats contractants désignés: **AT BE CH DE GB IT LI LU NL SE**

(56) Documents cités:
DE-A-2 709 379
FR-A-2 515 390
GB-A-2 114 346
US-A-4 023 203
US-A-4 040 108
US-A-4 345 168

HEWLETT-PACKARD JOURNAL, volume 34, no. 6, juin 1983, pages 15-23, Amstelveen, NL; K.R. HOECKER et al.: "Handpulled magnetic card, mass storage system for a portable computer"

(73) Titulaire: **ELECTRONIQUE SERGE DASSAULT**
**80, avenue Marceau**
**F-75008 PARIS (FR)**

(72) Inventeur: **Barré, Yvon**
**12, rue Perrault**
**F-78330 Fontenay-Le-Fleury (FR)**
Inventeur: **Deleuze, Bernard**
**103, avenue de la Bourdonnais**
**F-75007 Paris (FR)**
Inventeur: **Maury, Lionel**
**3, allée Georges**
**F-78530 Buc (FR)**

(74) Mandataire: **Plaçais, Jean-Yves et al**
**Cabinet Netter, 40, rue Vignon**
**F-75009 Paris (FR)**

Courier Press, Leamington Spa, England.

## Description

L'invention concerne les dispositifs de la famille dite "terminaux points de vente", destinès à automatiser au moins partiellement les transactions commerciales et financières.

Ces terminaux sont destinès à être installès par exemple chez un commerçant, qui exécute une transaction avec son client, lequel fournit la plupart du temps un chèque comme moyen de paiement.

On connaît déjà des terminaux de ce genre qui sont propres à l'encaissement—transaction financière—à la suite d'une transaction commerciale. Dans le cas d'un paiement par chèque, il existe des terminaux capables d'imprimer le montant de la transaction sur le chèque, que le client n'a donc plus qu'à signer. Une telle solution demeure imparfaite, car le commerçant doit encore acquérir ou "saisir" les caractéristiques du chèque pour sa compatibilité. De plus, le traitement bancaire des chèques (chambre de compensation en particulier) est une opération onéreuse, qu'il convient donc de simplifier autant que possible.

La présente invention a essentiellement pour but d'apporter une solution à ces problèmes.

L'invention a pour objet un dispositif de lecture de caractères comportant une piste équipée de galets d'axe fixe relativement au bâti propres à recevoir et entraîner un document portant ces caractères, un transducteur de prémagnétisation des caractères, un transducteur de lecture des caractères, et des moyens électroniques de commande et de traitement reliés à ces transducteurs, lesdits transducteurs étant montés flottants, respectivement en regard de ces galets (US—A—4023203).

Selon la principale caractéristique de l'invention telle que revendiquée, les transducteurs sont prévus pour la lecture de caractères magnétiques-optiques, tels que les caractères dits CMC7, ou en variante, ceux dits E13BB et lesdits transducteurs sont sollicité élastiquement vers les galets sur commande.

La lecture de caractères magnétiques-optiques est une opération assez délicate, pour laquelle on a considéré jusqu'à présent que les têtes ou transducteurs devaient se situer en position fixe par rapport au document à lire. Au contraire, la présente invention préconise que la piste comporte, pour recevoir le document, des galets d'axe fixe relativement à un bâti du dispositif, tandis que les transducteurs eux-mêmes sont montés flottants, respectivement en regard de ces galets, et sollicités élastiquement vers ceux-ci sur commande.

En outre, cette disposition permet d'utiliser le mécanisme pour l'introduction d'autres documents destinés à être édités.

Dans un mode de réalisation préféré, chaque transducteur est monté à l'extrémité d'un bras d'un levier en L respectif, articulé à pivotement en son angle sur le bâti, tandis que les deux leviers sont sollicités, à l'extrémité de leur autre bras, par l'intermédiaire de moyens élastiques respectifs, par une tige d'actionnement commandé par un électro-aimant.

Avantageusement, la tige est elle-même soumise à un rappel élastique, à l'encontre de sa sollicitation par l'électro-aimant.

Il s'est avéré qu'un tel montage permet une bonne lecture des caractères optiques-magnétiques, en dépit du préjugé contraire admis jusqu'à présent.

Selon une autre caractéristique de l'invention, il est associé à ces transducteurs des moyens électroniques de lecture, qui comprennent:

—des moyens d'amplification analogique possédant une caractéristique de gain anti-saturation,

—un premier moyen comparateur, à hystérésis, possédant une entrée de signal reliée à la sortie des moyens d'amplification analogique, une entrée de référence recevant une tension de référence proche de 0 volt, une sortie, et une liaison de la sortie vers l'entrée de référence pour engendrer l'hystérésis,

—un second moyen comparateur, rapide, possédant une entrée de signal reliée à la sortie des moyens d'amplification analogique et une entrée de référence reliée à la sortie du premier comparateur, par un circuit capacitif à diode, et à la sortie de ce second comparateur par une autre liaison à diode, et

—des moyens logiques pour fournir un signal logique représentatif des caractères lus, d'après les sorties des deux moyens comparateurs.

Dans un mode de réalisation avantageux, les moyens amplificateurs analogiques comprennent, en série:

—un préamplificateur à faible bruit,
—un filtre du ronflement secteur,
—un amplificateur,
—un circuit limiteur de bruit de fond, et
—un amplificateur à caractéristique de gain non linéaire, anti-saturation.

Pour leur part, les moyens logiques comportent, de préférence:

—une première bascule, formant mémoire, possédant une entrée d'horloge commandée à travers une porte NON-ET par les sorties des premier et second moyens comparateurs, et une entrée de remise à zéro commandée par la sortie du premier comparateur, et

—une seconde bascule, formant flip-flop, commandée par la sortie de la première bascule, et fournissant un signal logique représentatif des caractères lus.

Selon une autre caractéristique de l'invention, le dispositif de lecture précité est complété par des moyens électroniques propres à l'exécution d'une transaction commerciale, ainsi que par des moyens d'impression et des moyens logiques de commande. Ces moyens logiques de commande sont agencés pour fournir, après l'exécution d'une transaction commerciale, validée par les deux parties, une suite de commandes propres à la lecture des caractères optiques-magnétiques d'un chèque, et à l'impression sur ce chèque du montant de la transaction.

De préférence, les moyens logiques de commande produisent aussi l'impression d'un ticket client, et d'un journal du commerçant. Il est possible, sur ce journal, imprimé en continu sur une bande, de reporter les caractéristiques lues sur le chèque. Ceci peut être remplacé ou complété par l'inscription complète des caractéristiques de la transaction dans une mémoire électronique propre au commerçant.

Selon encore une autre caractéristique de l'invention, les moyens logiques de commande sont en outre aptes à faire présenter conjointement, à une mémoire locale, ou à une mémoire distante, des signaux électriques qui représentent conjointement des caractères lus sur le chèque, et des caractéristiques de la transaction, ce qui permet une simplification du traitement bancaire des chèques.

En effet, on dispose alors soit au niveau du commerçant, soit à un niveau centralisé, d'une mémoire électronique comportant les caractéristiques complètes du chèque et de la transaction, d'où la possibilité d'automatiser entièrement les opérations de compensation du chèque.

D'autres caractéristiques et avantages de l'invention apparaîtront à l'examen de la description détaillée ci-après, et des dessin annexés, sur lesquels:

la figure 1 est un schéma de principe illustrant la structure générale d'un terminal selon l'invention;

la figure 2 est une vue latérale illustrant les principaux mécanismes du dispositif d'impression et de lecture de caractères CMC7 de la figure 1;

la figure 3 est une vue partielle simplifiée de la figure 2;

la figure 4 est une vue de dessus correspondant à la figure 3 et faisant apparaître un chèque;

la figure 5 est une vue schématique d'une tête de lecture blindée utilisée selon la présente invention;

la figure 6 est un schéma électrique partiellement détaillé des moyens de lecture des caractères CMC7;

la figure 7 est une vue détaillée de l'amplificateur analogique de la figure 6;

les figures 8A et 8B illustrent schématiquement les formes d'onde obtenues lors de la lecture de caractères CMC7; et

les figures 9A à 9J sont des diagrammes temporels schématiques destinés à aider la compréhension du fonctionnement des moyens de lecture des figures 6 et 7.

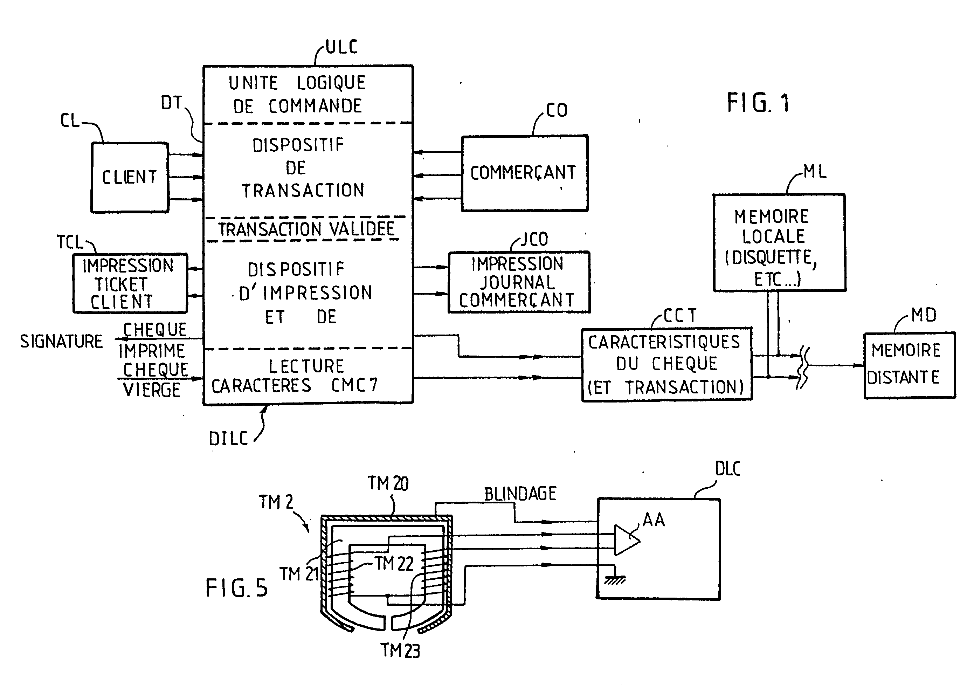

Sur la figure 1, la référence ULC désigne une unité logique de commande sous le contrôle de laquelle se trouvent:

—un dispositif de transaction DT, propre à l'exécution d'une transaction entre un client CL et un commerçant CO. Dans sa version la plus simple, ce dispositif de transaction est une caisse enregistreuse, avec ou sans validation par le client,

—un dispositif d'impression et de lecture de caractéres CMC7, noté dans son ensemble DILC.

De manière classique, le dispositif DILC est propre à l'impression d'un ticket de client TCL, ainsi qu'à un journal de commerçant JCO, qui peut se présenter sous la forme d'un bande en continu. Un chèque vierge peut être introduit dans le dispositif DILC, qui le restitue revêtu du montant de la transaction au client, pour signature.

Comme on le verra plus loin, l'ensemble des dispositifs qui sont sous le contrôle de l'unité logique de commande ULC permettent la fourniture de signaux électriques représentatifs des caractéristiques du chèque et de la transaction à une unité CCT, qui en assure l'inscription sur une mémoire locale ML, telle qu'une disquette, et/ou la transmission à une mémoire distante MD, par exemple par le réseau téléphonique.

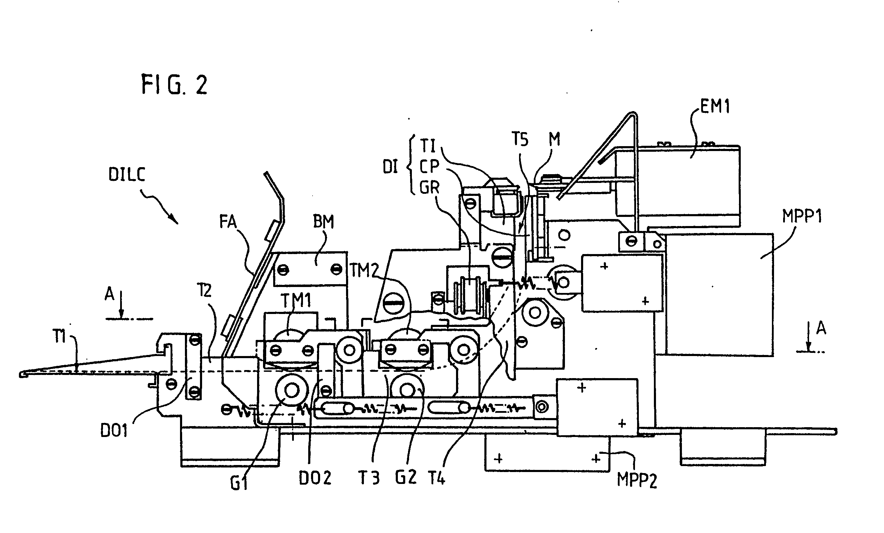

La figure 2 est une vue générale du dispositif DILC. On distingue en FA un flasque destiné à supporter la face avant du dispositif, ainsi que différentes pièces BM qui constituent son bâti mécanique. Le dispositif d'impression DI lui-même, qui peut être d'une structure connue, comporte une tête d'impression placée en TI, par exemple une tête d'impression à aiguille (non illustrée en détail), équipée d'une contreplaque CP, tandis qu'on aperçoit en GR un galet de renvoi destiné à assurer le déplacement de la tête d'impression. L'ensemble des mouvements nécessaires au dispositif DILC peut être fourni par un moteur pas à pas MPP1.

Un premier rouleau (non visible) fournit une bande de papier sur laquelle la tête d'impression TI peut établir le ticket du client, qui est finalement découpé par un massicot M sous le contrôle d'un électro-aimant EM1. Un second rouleau débite en continu une autre bande du papier, qui se présente sur la contre-plaque CP de manière adjacente à la première, et sur laquelle la tête d'impression va pouvoir établir le journal du commerçant.

Un autre trajet est prévu pour les chèques. Ce trajet commence par une platine T1, munie d'un rebord vertical, sur lequel est introduit le chèque. Lorsqu'il arrive au niveau d'un détecteur optique DO1 (détection du côté du chèque), le chèque actionne un mécanisme d'entraînement à partir d'un autre moteur pas à pas MPP2, lequel sollicite des galets G1 et G2 qui vont faire passer le chèque à vitesse contrôlée dans les parties T2 puis T3 de son trajet. Entre temps, le bord avant du chèque sera détecté par le détecteur DO2, qui permet à l'unité centrale UCL de définir un signal de validation de lecture des caractères CMC7. Comme on le verra plus loin, cette lecture se fait par une tête TM2 placée en regard du galet G2, tandis qu'une tête TM1 placée en regard du galet G1 a auparavant prémagnétisé les inscriptions CMC7 du chèque (figures 2 à 4).

Après cela, le chèque remonte pour se trouver en position opératoire d'impression sur la contre-plaque CP. L'impression sur le chèque est alors commandée. Cette impression comporte l'inscription (en clair) du montant de la transaction, du lieu, de la date et du bénéficiaire. On note que cette impression s'effectue colonne par colonne, puisque la tête d'impression se déplace perpendiculairement au sens normal d'écriture sur un chèque. Ceci permet de plus de générer les caractères selon une police différente de celle des imprimantes à aiguilles classiques (double format vertical par exemple). Les risques de fraude sont alors nettement plus réduits.

Après cette inscription, qui s'effectue donc dans la partie T5 du trajet du chèque, celui-ci sort soit vers le haut, soit de préférence en rafaisant un trajet inverse pour revenir à la platine T1.

De plus, par un second passage du chèque dans l'imprimante, il est possible d'imprimer au verso du chèque le numéro de ticket associé à cette transaction, et l'endos de remise en banque (pour le commerçant).

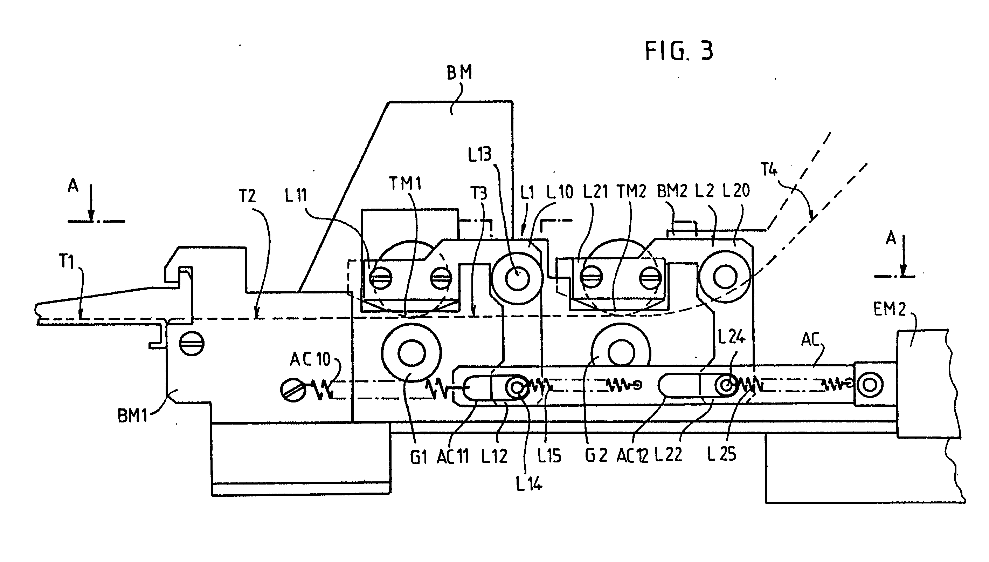

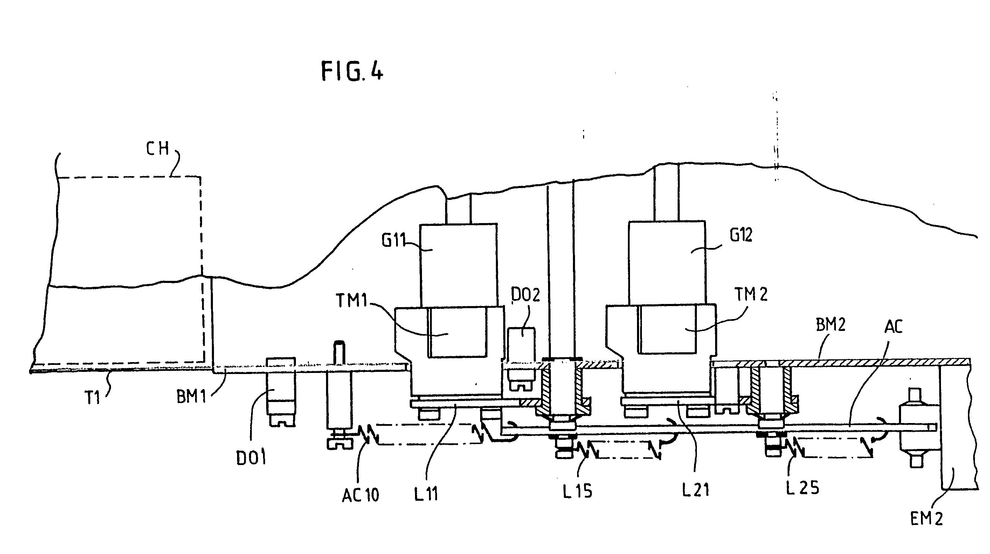

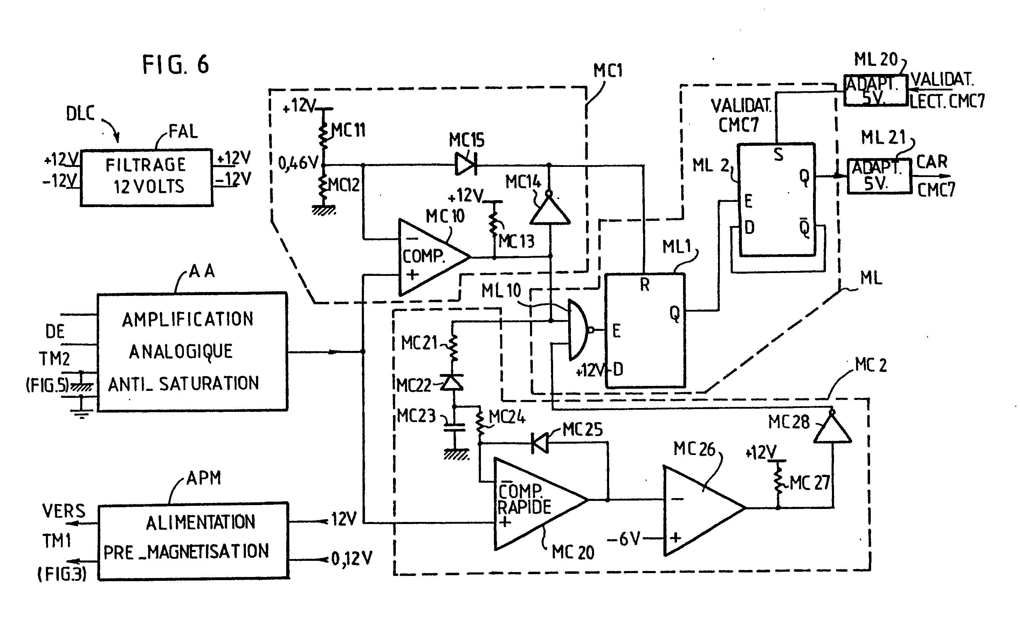

Il est maintenant fait référence spécifiquement aux figures 3 et 4, pour une description plus détaillée de la lecture des caractéres magnétiques du chéque.

Au-dessus du galet G1 est donc montée la tête de prémagnétisation TM1. Cette tête est supportée à l'extrémité L11 d'un levier en forme générale de L, noté dans son ensemble L1. En son angle L10, le levier est articulé à pivotement par un axe L13 sur le bâti BM. L'autre bras, L12, du levier, descend vers le bas, où il offre un téton L14, qui s'engage dans un premier oeillet AC11, oblong, ménagé dans une tige d'actionnement AC. Sur ce téton L14 vient s'accrocher un ressort L15, qui prend appui par ailleurs sur la tige AC elle-même.

En position de repos, la tête TM1 est à distance du galet G1. Lorsqu'un électro-aimant EM2 est actionné, par l'unité UCL, son noyau plongeur tire la tige AC sur laquelle il est articulé, ce qui se traduit par un déplacement de la tige AC vers la droite, et par conséquent, de l'oeillet AC11 de celle-ci autour du téton L14. Mais le téton est en même temps sollicité élastiquement vers la droite, ce qui fait descendre la tête Tm1 vers le galet G1. Dans ce mode de réalisation, le point d'appui du ressort L15 sur la tige AC est donc à droite de l'oeillet AC11 logeant le téton L14. Et il est prévu à gauche, à l'extrémité libre de la tige AC, un ressort AC10 pour le rappel de celle-ci par rapport au bâti, afin de ramener les têtes dans leur position normale de repos.

Le montage de la tête de lecture TM2 est le même, et ne sera pas décrit en tous ses détails: un levier L2 articulé en son angle L20 sur le bâti porte à l'extrémité de l'un de ses bras L21 la tête de lecture TM2, tandis que son autre extrémité L22 porte un téton L24 mobile dans l'oeillet AC12, et susceptible d'être tiré vers la droite par un ressort L25.

Bien qu'elle soit inhabituelle, il s'est avéré que cette disposition permet une excellente lecture des caractères CMC7 qui sont portés sur un chèque, et ce en dépit des altérations de divers types que ces caractères peuvent avoit subi.

L'entraînement du chèque est assuré par le fait que les galets inférieurs G1 et/ou G2 sont entraînés à partir du moteur pas à pas précité, ou d'un moyen moteur équivalent. Les galets G1 et G2 sont bien entendu revêtus d'un matériau convenable, qui est par exemple le néoprène de dureté 40 Shore A vendu par Dupont de Nemours.

La figure 4 est une vue de dessus correspondant à une coupe suivant la ligne brisée A—A de la figure 3. Elle fait apparaître une formule de chèque, au début de son introduction sur la platine T1. Contrairement à la figure 3, elle fait aussi apparaître les détecteurs optiques DO1 et DO2. On remarque encore que, derrière les têtes magnétiques TM1 et TM2, sont prévus des contre-galets G11 et G12, situés en face des galets G1 et G2, et qui peuvent être munis du même revêtement périphérique que ceux-ci.

Il est maintenant fait référence à la figure 5, qui illustre schématiquement la tête magnétique TM2, reliée à une carte électronique de lecture de caractères DLC. La tête magnétique TM2 comporte un blindage TM20 à l'intérieur duquel est placé un circuit magnétique TM21. Sur ce circuit magnétique sont prévus deux enroulements TM22 et TM23, avec un point commun. L'entrefer du circuit magnétique TM21 est de l'ordre de 40 microns, de manière connue. Il s'est avéré qu'une tête de lecture blindée de ce genre, qui peut être obtenue auprès de la Société du Royaume Uni Magnetic Components Ltd. permet une meilleure lecture encore des caractères CMC7 portés sur le chèque. Il part donc de cette tête de lecture quatre connexions, dont l'une est le point commun des deux enroulements TM22, TM23, deux autres appliqués à un amplificateur AA, sont les points chauds ou extrémités libres de ces deux enroulements, et la dernière est une connexion provenant du blindage TM20.

Il est maintenant fait référence à la figure 6, qui illustre la composition d'ensemble du dispositif de lecture des caractères DLC de la figure 5.

Alors que l'unité logique de commande fonctionne normalement sous une tension de 5 volts, le dispositif DLC fonctionne sous deux tensions de plus et moins 12 volts, qui sont d'abord soumises à un filtrage dans un circuit FAL. A partir de ces tensions, un dispositif APM alimente la tête de prémagnétisation TM1. En variante, cette tête de prémagnétisation peut être remplacée par une tête à aimant permanent.

Les quatre connexions précitées, émanant de la tête de lecture TM2 (figure 5 notamment) sont appliquée à une chaîne d'amplification analogique anti-saturation, notée dans son ensemble AA. ON en décrira plus loin le mode de réalisation préférentiel. Cette chaîne d'amplification fournit des signaux électriques analogiques, représentatifs de la fonction de transducteur réalisée par la tête TM2.

Ces signaux sont appliqués à deux circuits comparateurs MC1 et MC2, qui agissent conjointement pour exciter un circuit logique ML, lequel fournit les caractères CMC7 lus.

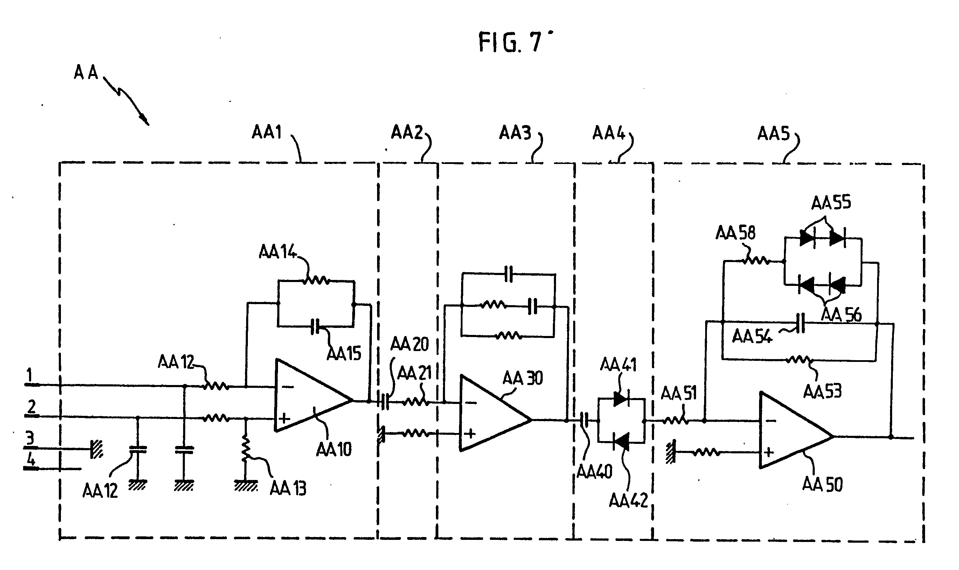

La figure 7 illustre la structure détaillée de la chaîne d'amplification AA. Les deux points chauds provenant des enroulements TM22 et TM23 sont notés 1 et 2 respectivement. Ils sont appliqués à un préamplificateur à faible bruit noté AA1. Celui-ci se compose d'un amplificateur différentiel AA10, tel que le modèle ADOPO7 vendu par la Société des Etats-Unis Analog Devices. Les signaux 1 et 2 sont appliqués respectivement à l'entrée inverseuse et à l'entrée non inverseuse de cet amplificateur AA10. Chaque liaison ainsi constituée comporte en parallèle sur la masse un condensateur de 220 picofarads par exemple, et en série une résistance de 3300 kiloohms, tels que AA11 et AA12. L'entrée non inverseuse est reliée à la masse pas une résistance AA13 de 390 kiloohms (toutes valeurs numériques données à titre d'exemple). Enfin, l'entrée inverseuse de l'amplificateur AA10 est reliée à sa sortie par le réseau parallèle d'une résistance AA14 égale à la résistance AA13, et d'un condensateur AA15 de 100 picofarads environ.

Ce préamplificateur à faible bruit est suivi d'une liaison propre à l'élimination du bruit de ronflement lié au secteur (50 Hertz en France). A cete effet, un condensateur AA20 de 22 nanofarads est suivi d'une résistance AA21 de 3300 ohms, qui est à son tour reliée à l'entrée inverseuse d'un amplificateur ultérieur AA30, faisant partie d'un étage amplificateur AA3. L'entrée non inverseuse de cet amqlificateur AA30, qui est par exemple le modèle LM358 de la Société Motorola, est relié à la masse par une autre résistance de 3300 ohms.

Entre la sortie et l'entrée de l'amplificateur AA30 est prévu un réseau de contre-réaction avec filtrage, dont les éléments sont, par exemple les suivants, en parallèle:
—un condensateur de 100 picofarads,
—une résistance de 10 kilo-ohms en série sur un condensateur de 220 picofarads; et
—une résistance de 220 kilo-ohms.

La sortie de l'amplificateur AA30 est connectée à une liaison destinée à former un étouffement de bruit. A cet effet, la partie AA4 des moyens AA commence par un condensateur AA40, d'une valeur de 1 microfarad par exemple, et suivi de deux diodes AA41 et AA42, montées tête bêche en parallèle. Ces deux diodes sont des diodes au silicium telles que le modèle 1N4148, possédant une tension de seuil de 0,2 à 0,3 volt.

La sortie de cette section AA4 du montage est alors appliquée au dernier étage AA5, qui est l'étage amplificateur à gain "logarithmique", ou plus exactement à caractéristique de gain non linéaire anti-saturation. La liaison est assurée par une résistance AA51 de 33 kilo-ohms jusqu'à l'entrée inverseuse de l'amplificateur AA50. Celui-ci est à nouveau le modèle LM358 par exemple. Son entrée non inverseuse est connecté à la masse par une autre résistance de même valeur que la résistance AA51.

Le réseau de contre-réaction monté entre la sortie et l'entrée inverseuse de l'amplificateur AA50 comporte une voie muni d'une résistance AA53, de 330 kilo-ohms per exemple, une voie parallèle munie d'une capacité de 100 picofarads notée AA54, et une troisième voie parallèle constituée de deux paires de diodes, en parallèle l'une sur l'autre. La paire AA55 est constituèe de deux diodes 1N4148 montées en série dans le même sens. La paire AA56 est constitué de deux diodes montées en série, en sens inverse. Cette double paire de diodes en parallèle est montée sur une résistance AA58 qui mesure par exemple 82 kilo-ohms.

La caractéristique logarithmique ou anti-saturation de cet étage AA5 est essentiellement fournie par les deux paires de diodes AA55 et AA56.

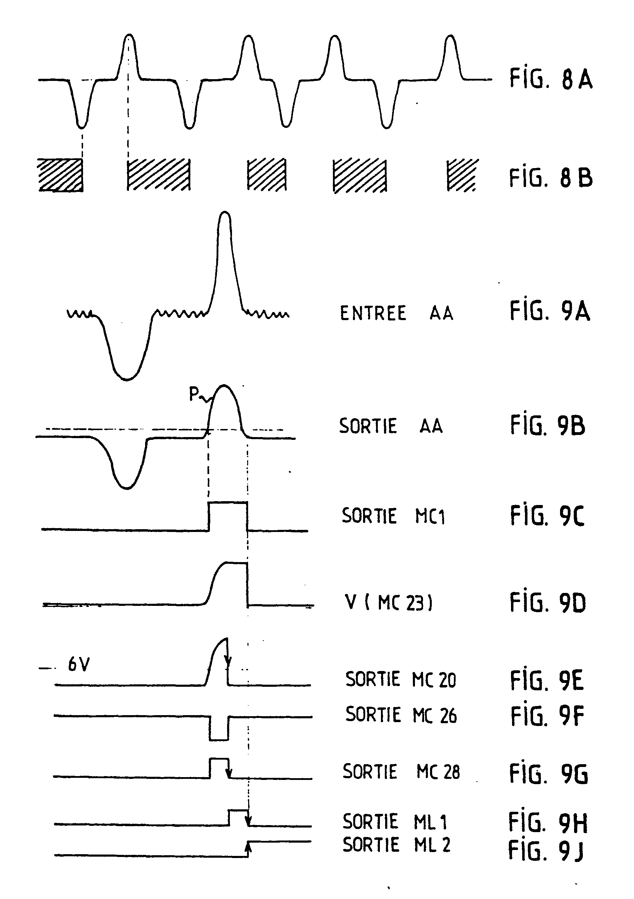

Il est maintenant fait référence aux figures 8A à 8B. La seconde illustre schématiquement des portions de caractères CMC7 (tronqués en haut et en bas). En regard, la figure 8A illustre les transitions magnétiques lues par la tête TM2 (signal théorique épuré de tout bruit).

Comparativement, la figure 9A illustre un signal susceptible d'apparaître à l'entrée de la chaîne d'amplification, comportant divers types d'altérations qui produisent l'une du bruit autour du zéro, l'autre des différences dans la forme d'un signal négatif et d'un signal positif adjacents l'un à l'autre. La figure 9B montre comment on obtiendra en sortie de la chaîne d'amplification AA un signal qui est tout d'abord dénué de tout bruit, en raison d'une part de la liaison AA2 qui filtre les bruits de secteur, et d'autre part de la liaison AA4 qui filtre les bruits proches du zéro, ou plus exactement de la composante continue définie par le condensateur AA40. Pour sa part, l'étage AA5 par sa caractéristique logarithmique ou anti-saturation tend à diminuer les différences d'amplitude existant entre les signaux successifs, ici un signal négatif et un signal positif, donnés à titre d'exemple, étant observé que les signaux négatifs ne serviront pas dans la suite. De plus, le circuit AA5 évite un écrêtage brutal des signaux de forte amplitude, qui gênerait la détermination de leur crête, qui est nécessaire ainsi qu'on le verra plus loin.

On retourne maintenant à la figure 6. Le signal de sortie de la figure 9B est appliqué en même temps aux deux montages comparateurs MC1 et MC2.

Le montage comparateur MC1 comprend un amplificateur comparateur MC10, dont l'entrée non inverseuse reçoit la sortie du circuit AA. Son entrée inverseuse est connectée à un diviseur de tension fournissant normalement une tension de 0,46 volt, par un diviseur de tension résistif MC11, MC12 monté entre la tension de +12 volts et la masse. La sortie du comparateur MC10 est reliée à la tension +12 volts par une résistance MC13. Elle est également reliée à un amplificateur inverseur MC14, dont la sortie rencontre la cathode d'une diode MC15, dont l'anode est reliée à l'entrée inverseuse de l'amplificateur MC10. Lorsque la sortie du comparateur MC10 est basse, celle de l'inverseur MC14 est haute, et la diode MC15 est dont bloquée, moyennant quoi une tension de 0,46 volt est applliquée à l'entrée inverseuse du comparateur MC10. C'est dans cet état que celui-ci reçoit le signal de la figure 9B. Il va donc passer brutalement à l'état haut dès que l'alternance positive P de la figure 9B dépasse 0,46 volt, comme l'illustre la figure 9C. A ce moment la sortie de l'inverseur MC14 est basse, la diode MC15, qui est une diode Schottky, d'un seuil de 0,1 volt, devient passante, et porte à 0,1 volt la référence appliquée à l'entrée inverseuse du comparateur MC10. Le signal de sortie du comparateur illustrée sur la figure 9C ne pourra donc repasser à zéro (logique) que lorsque l'alternance P redescendra au-dessous de 0,1 volt environ. Il en résulte un hystérésis sur le fonctionnement du montage comparateur MC1. La comparateur MC10 est par exemple le modèle LM319 de la Société National Semiconductor.

Pour sa part, le montage comparateur MC2 comporte essentiellement un amplificateur comparateur rapide MC20, tel que le modèle TDBO353DP vendu par la Société française Thomson CSF. L'entrée non inverseuse de ce comparateur MC20 est reliée à la sortie de la chaîne d'amplification AA. Sa sortie est reliée à l'anode d'une diode (1N4148) notée MC25, et dont la cathode rejoint l'entrée inverseuse du même amplificateur. Cette entrée est encore reliée par une résistance MC24, de 1000 ohms par exemple, à un condensateur MC23, dont la capacité est par exemple de 22 nanofarads. Le condensateur MC23 est par ailleurs relié à la masse. Son point commun avec la résistance MC24 est relié à l'anode d'une diode Schottky MC22, dont la cathode rejoint une résistance MC21, reliée à son tour à la sortie du comparateur MC10.

Durant les alternances négatives ou les passages autour de zéro du signal issu de la chaîne AA, la sortie du comparateur MC10 est basse, et la diode MC22 empêche de ce fait le condensateur MC23 de se charger au-dessus de 0,1 volt. L'entrée inverseuse du comparateur MC20 reçoit donc cette tension comme référence, et son entrée non inverseuse reçoit en principe une tension inférieure pendant la même période, d'où il résulte que la sortie du comparateur MC20 talonne à environ—12 volts. La diode MC25 est donc bloquée. Tout signal qui pourrait se développer, de manière indésirable, en sortie du comparateur MC20, serait de toute façon inhibé par le fait que la porte NON-ET ML10 que l'on décrira plus loin est également soumise à la condition que le signal de sortie du comparateur MC10 soit haut.

Dès que cette dernière condition est réalisée, le condensateur MC23 peut se charger. Il le fera dès que la tension présente sur l'entrée non inverseuse du comparateur MC20 monte, ainsi que l'illustre la figure 9D, et ce pendant tout le début de l'alternance P du signal de sortie de la chaîne AA. Une fois atteinte la crête de cette alternance P, la charge du condensateur se maintient jusqu'à la retombée de la sortie du comparateur MC10 à son niveau bas.

Comme l'illustre alors la figure 9E, la sortie du comparateur MC20 monte pendant la charge du condensateur MC23, c'est-à-dire pendant la partie montante du signal P de la figure 9B. Elle monte ainsi jusqu'à environ 12 volts. Mais dès que l'alternance P redescend, la sortie du comparateur MC20 descend brutalement à zéro, produisant ainsi une transition utile aux signaux logiques.

Cette sortie est appliquée à l'entrée inverseuse d'un comparateur MC26, tel que le modèle LM319 déjà cité, et dont l'entrée non inverseuse reçoit une tension de référence de −6 volts. Il en résulte une forme en créneau illustrée sur la figure 9F pour la sortie de ce comparateur MC26, sortie que est tirée vers la tension de +12 volts par une résistance MC27. Un amplificateur inverseur MC28 fournit alors un signal tel qu'illustré sur la figure 9G, pour être appliqué à la seconde entrée de la porte NON-ET ML10, dont la première entrée reçoit la sortie du comparateur MC10. La sortie de cette même porte est appliquée à l'entrée d'horloge d'une bascule bistable ML1, du type bascule mémoire. L'entrée D de celle-ci reçoit un signal de +12 volts. Son entrée R de remise à zéro reçoit la sortie de l'inverseur MC14. La bascule est donc forcée à zéro tant que le comparateur MC10 a sa sortie à un niveau bas. Pendant que cette même sortie est au niveau haut, le signal fourni pas la porte NON-ET ML10 en réponse au montage comparateur MC2 permet un changement d'état de la bascule ML1. Celle-ci revient à zéro dès le retour à zéro de la sortie du montage comparateur MC1.

Enfin, les moyens logiques ML comportent une seconde bascule, dont l'entrée d'horloge est reliée à la sortie Q de la première bascule ML1. Cette bascule est montée en flip-flop, par le fait que sa sortie inversée $\overline{Q}$ est reliée à son entrée de mise en mémoir D. L'entrée de validation S de la bascule ML2 est soumise à une autorisation de lecture provenant d'un microprocesseur de l'unité UCL, à partir d'un circuit d'adaptation ML20 pour passer d'une tension de 5 volts à une tension de 12 volts.

Inversement, la sortie Q de la bascule ML2, qui fournit le signal de lecture proprement dit, est soumise à un circuit ML21 pour l'adaptation de 12 volts à 5 volts, circuit dont la sortie fournit les caractères CMC7, ainsi que l'illustre la figure 9J.

Le circuit qui vient d'être décrit présente de nombreux avantages significatifs, dont le fait que le premier montage comparateur MC1 évite la prise en compte de rebonds du signal incident, autour de la valeur zéro, définissant ainsi une sorte de fenêtre de lecture. Pour sa part, le second montage comparateur MC2, qui est en principe sensible à tout passage au-dessus de zéro du signal incident, ne peut fonctionner que quand ladite fenêtre est ouverte. Réciproquement, lorsque ladite fenêtre est ouverte, il n'est possible de prendre en considération qu'une et une seule transition fournie par le montage comparateur MC2, étant observé que plusieurs transitions pourraient intervenir dans le cas des rebonds précités.

L'expérience a montré que les dispositions qui viennent d'être décrites pour la lecture des caractères CMC7 fournissent d'excellents résultats, avec un taux d'erreur extrêmement faible. Il est alors possible d'introduire directement les caractéristiques du chèque, sous forme de signaux électriques, dans une mémoire locale telle qu'une disquette ML (figure 1) ou tout autre type de mémoir portable. Cette mémoire locale peut servir de journal électronique pour le commerçant, en reflétant non seulement les transactions et leurs caractéristiques, mais aussi les caractéristiques des moyens de paiement associés. Il s'ensuit une simplification manifeste de la tenue de compatibilité. La même disquette, une copie de celle-ci, ou une disquette autrement remplie, peut conserver les indications relatives à chacun des chèques reçus par le commerçant concerné, à savoir les caractéristiques du chèque lui-même, ainsi que son montant, sa date, et le cas échéant l'identification du commerçant.

En variante, ou en complément, ces caractéristiques du chèque sont transmises par une transmission en ligne à une mémoire distante, qui peut être implantée dans la banque avec laquelle le commerçant travaille habituellement.

## Revendications

1. Dispositif de lecture dynamique de caractères comportant une piste (T1—T5) équipée de galets (G1, G2) d'axe fixe relativement au bâti propres à recevoir et entraîner un document portant ces caractères, en position de lecture prédéterminée, un transducteur (TM1) de prémagnétisation des caractères, un transducteur (TM2) de lecture des caractères, et des moyens électroniques de commande et de traitement (ULC) reliés à ceu transducteurs, lesdits transducteurs (TM1, TM2) étant montés flottants, respectivement en regard de ces galets, caractérisé en ce que les transducteurs (TM1, TM2), prévus pour la lecture de caractères magnétiques-optiques tels que les caractères dits CMC7, sont sollicités élastiquement vers les galets (G1, G2) sur commande.

2. Dispositif selon la revendication 1, caractérisé en ce que chaque transducteur (TM1, TM2) est monté à l'extrémité d'un bras (L11, L21) d'un levier en L respectif (L1, L2), articulé à pivotement en son angle (L10, L20) sur le bâti, tandis que les deux leviers (L1, L2) sont sollicités à l'extrémité de leur autre bras (L12, L22), par l'intermédiaire de moyens élastiques respectifs (L15, L25), par une tige d'actionnement (AC) commandée par un électro-aimant (EM2).

3. Dispositif selon la revendication 2, caractérisé en ce que la tige (AC) est elle-même soumise à un rappel élastique (AC10) à l'encontre de sa sollicitation par l'électro-aimant (EM2).

4. Dispositif selon l'une des revendications 1 à 3, caractérisé en ce que les moyens électroniques comportent des moyens de lecture qui comprennent:

—des moyens d'amplification analogique (AA) possédant une caractéristique de gain anti-saturation;

—un premier moyen comparateur (MC1), à hystérésis, possédant une entrée de signal reliée à la sortie des moyens d'amplification analogique, et une entrée de référence recevant une tension de référence proche de zéro volt, une sortie, et une liaison de la sortie vers l'entrée de référence, pour engendrer l'hystérésis,

—un second moyen comparateur (MC2), rapide, possédant une entrée de signal reliée à la sortie des moyens d'amplification analogique, et une entrée de référence reliée à la sortie du premier comparateur, par un circuit capacitif à diode, et la sortie de ce second comparateur par un liaison à diode, et

—des moyens logiques (ML) pour fournir un signal logique représentatif des caractères lus, d'après les sorties des deux moyens comparateurs.

5. Dispositif selon la revendication 4, caractérisé en ce que les moyens amplificateurs analogiques (AA) comprennent, en série:

—un préamplificateur à faible bruit (AA1),

—un filtre du ronflement secteur (AA2),

—un amplificateur (AA3),

—un circuit limiteur de bruit de fond (AA4), et

—un amplificateur à caractéristique de gain non linéaire, anti-saturation (AA5).

6. Dispositif selon l'une des revendications 4 et 5, caractérisé en ce que les moyens logiques comportent:

—une première bascule (ML1), formant mémoire, possédant une entrée d'horloge commandée à travers une porte NON-ET (ML10) par les sorties des premier et second moyens comparateurs (MC1, MC2), et une entrée de remise à zéro commandée par la sortie du premier comparateur (MC1), et

—une seconde bascule (ML2), formant flip-flop, commandée par la sortie de la première bascule (ML1), et fournissant un signal logique représentatif des caractéres lus.

7. Dispositif selon l'une des revendications précédentes, comportant en outre des moyens électroniques (DT) propres à l'exécution d'une transaction commerciale, ainsi que des moyens d'impression (DILC), et des moyens logiques de commande (ULC), caractérisé en ce que ces moyens logiques de commande (ULC) sont agencés pour fournir, après l'exécution d'une transaction commerciale (DT), une suite de commandes propres à la lecture des caractères optiques-magnétiques d'un chèque, et à l'impression sur ce chèque du montant de la transaction.

8. Dispositif selon la revendication 7, caractérisé en ce que l'impression sur le chèque s'effectue par colonnes, selon une police de caractères spéciale.

9. Dispositif selon l'une des revendications 7 et 8, caractérisé en ce que les moyens logiques de commande (ULC) commandent aussi l'impression d'un ticket client (TCL) et d'un journal du commerçant (JCO).

10. Dispositif selon l'une des revendications 7 à 9, caractérisé en ce que les moyens logiques de commande (ULC) sont en outre aptes à faire présenter conjointement, à une mémoire locale (ML) ou distante (MD), des signaux électriques représentatifs conjointement des caractères lus sur le chèque et des caractéristiques de la transaction, ce qui permet une simplification du traitement bancaire des chèques.

**Patentansprüche**

1. Vorrichtung zum dynamischen Abtasten von Zeichen, bestehend aus einer Bahn (T1—T5) mit Rollen (G1, G2) mit bezüglich des Rahmens feststehender Achse, die ein die Zeichen tragendes Dokument aufnehmen und in eine festgelegte Abtaststellung mitnehmen können, einem Wandler (TM1) für die Zeichen-Vormagnetisierung, einem Wandler (TM2) zum Lesen der Zeichen, und mit elektronischen Steuer- und Verarbeitungseinrichtungen (ULC), die mit den Wandlern verbunden sind, wobei die Wandler jeweils in bezug auf die Rollen beweglich angeordnet sind, dadurch gekennzeichnet, daß die zum Lesen von magnetisch-optischen Zeichen wie den sog. CMC-7-Zeichen vorgesehenen Wandler (TM1, TM2) gesteuert elastisch in Richtung auf die Rollen (G1, G2) belastet sind.

2. Vorrichtung nach Anspruch 1, dadurch gekennzeichnet, daß jeder Wandler (TM1, TM2) am Ende eines Armes (L11, L21) eines L-förmigen Hebels (L1, L2) montiert ist, der in seinem Winkel (L10, L20) an dem Rahmen schwenkbar gelagert ist, und daß die beiden Hebel (L1, L2) am Ende ihres anderen Armes (L12, L22) über elastische Einrichtungen (L15, L25) von einer durch einen Elektromagnet (EM2) gesteuerten Betätigungsstange (AC) beaufschlagt sind.

3. Vorrichtung nach Anspruch 2, dadurch gekennzeichnet, daß die Stange (AC) ihrerseits entgegen ihrer Beaufschlagung durch den Elektromagnet (EM2) elastisch belastet ist.

4. Vorrichtung nach einem der Ansprüche 1 bis 3, dadurch gekennzeichnet, daß die elektronischen Einrichtungen Abtasteinrichtungen aufweisen, die

—Einrichtungen (AA) zur analogen Verstärkung mit einer Verstärkungscharakteristik zur Sättigungsbegrenzung,

—einen ersten Vergleicher (MC1) mit Hysterese mit einem Signaleingang, der mit dem Ausgang der analogen Verstärkungseinrichtungen verbunden ist, einem Bezugseingang, der eine Bezugsspannung von nahe Null Volt erhält, einem Ausgang und einer Verbindung des Ausgangs mit dem Bezugseingang zur Erzeugung der Hysterese,

—einen zweiten schnellen Vergleicher (MC2) mit einem Signaleingang, der mit dem Ausgang der analogen Verstärkungseinrichtung verbunden ist, und einem Bezugseingang, der mit dem Ausgang des ersten Vergleichers durch eine kapazitive Diodenschaltung und mit dem Ausgang dieses zweiten Vergleichers durch eine Diodenverbindung verbunden ist, und

—logische Einrichtungen (ML) besitzen, die entsprechend den Ausgängen der beiden Vergleicher ein logisches Signal liefern, das die gelesenen Zeichen darstellt.

5. Vorrichtung nach Anspruch 4, dadurch gekennzeichnet, daß die Einrichtungen (AA) zur analogen Verstärkung in Reihe

—einen Vorverstärker (AA1) mit geringem Rauschen,

—ein Netzbrummfilter (AA2),

—einen Verstärker (AA3),

—eine Schaltung (AA4) zur Begrenzung des Hintergrundrauschens und

—einen Verstärker (AA5) mit einer nichtlinearen Verstärkungscharakteristik zur Sättigungsbegrenzung besitzen.

6. Vorrichtung nach einem der Ansprüche 4 und 5, dadurch gekennzeichnet, daß die logischen Einrichtungen

—einen ersten einen Speicher bildenden Kippkreis (ML1) mit einem Taktgebereingang, der über ein Nicht-und-Glied (ML10) durch die Ausgänge des ersten und des zweiten Vergleichers (MC1, MC2) gesteuert ist, und einem Nullstelleingang, der durch den Ausgang des ersten Vergleichers (MC1) gesteuert ist, und

—einen zweiten, einen Flip-Flop bildenden Kippkreis (ML2) aufweisen, der durch den Ausgang des ersten Kippkreises (ML1) gesteuert ist und ein die abgetasteten Zeichen darstellendes logisches Signal liefert.

7. Vorrichtung nach einem der vorhergehenden Ansprüche, die außerdem elektronische Einrichtungen (DT) zur Durchführung einer Handelstransaktion sowie Druckeinrichtungen (DILC) und logische Steuereinrichtungen (ULC) besitzt, dadurch gekennzeichnet, daß die logischen Steuereinrichtungen (ULC) nach Ausführung einer Handelstransaktion (DT) eine Reihe von Befehlen für die Lesung der optisch-magnetischen Zeichen eines Schecks und den Aufdruck des Transaktionsbetrags auf diesem Scheck geben können.

8. Vorrichtung nach Anspruch 7, dadurch gekennzeichnet, daß der Aufdruck auf dem Scheck in Kolonnen in einer besonderen Schriftart stattfindet.

9. Vorrichtung nach einem der Ansprüche 7 und 8, dadurch gekennzeichnet, daß die logischen Steuereinrichtungen (ULC) auch den Ausduck eines Kundelbelegs (TCL) und eines Kassenbuchs des Händlers (JCO) steuern.

10. Vorrichtung nach einem der Ansprüche 7 bis 9, dadurch gekennzeichnet, daß die logischen Steuereinrichtungen (ULC) außerdem auch einem örtlichen oder entfernten Speicher (ML oder MD) elektrische Signale liegern können, die die auf dem Scheck abgetastet en Zeichen sowie Merkmale der Transaktion darstellen, was eine Vereinfachung der Behandlung der Schecks durch die Bank gestattet.

**Claims**

1. An apparatus for dynamically scanning characters and comprising a channel (T1—T5) equipped with rollers (G1, G2) of fixed axis relative to the frame and adapted to receive and entrain a document carrying these characters in a predetermined scanning position, a transducer (TM1) for premagnetising the characters, a transducer (TM2) for scanning the characters and electronic control and processing means (ULC) connected to these transducers, the said transducers (TM1, TM2) being floatingly mounted, respectively facing these rollers, characterised in that the transducers (TM1, TM2) provided for scanning magnetic optical characters such as so-called CMC7 characters are urged elastically towards the rollers (G1, G2) on command.

2. An apparatus according to claim 1, characterised in that each transducer (TM1, TM2) is mounted at the end of an arm (L11, L21) of a respective L-shaped lever (L1, L2) adapted to pivot at its angle (L10, L20) on the frame while the two levers (L1, L2) are urged to the end of their other arm (L12, L22) by respective elastic means (L15, L25) by an actuating rod (AC) operated by an electromagnet (EM2).

3. An apparatus according to claim 2, characterised in that the rod (AC) is itself subject to elastic return (AC10) against the urging effort exerted by the electromagnet (EM2).

4. An apparatus according to one of claims 1 to 3, characterised in that the electronic means comprise scanning means comprising:
—analogue amplifier means (AA) having an anti-saturation gain characteristic,
—a first comparator means (MC1), of hysteresis type, having an input signal connected to the output of the analogue amplifier means and a reference input receiving a reference voltage close to zero volts, an output, and a connection between the output and the reference input, to generate the hysteresis,
—a second rapid comparator means (MC2) having an input signal connected to the output of the analogue amplifier means and a reference input connected to the output of the first comparator via a diode capacitor circuit, and the output of the second comparator by a diode link, and
—logic means (ML) to supply a logic signal representing the characters scanned according to the outputs of the two comparator means.

5. An apparatus according to claim 4, characterised in that the analogue amplifier means (AA) comprise in series:

—a low noise preamplifier (AA1),
—a means rumble filter (AA2),
—an amplifier (AA3),
—a background noise limiter circuit (AA4), and
—a non-linear anti-saturation gain characteristic amplifier (AA5).

6. A device according to one of claims 4 and 5, characterised in that the logic means comprise:
—a first flip-flop circuit (ML1) forming a memory and having a clock input controlled through a NO-AND gate (ML10) via the outputs of the first and second comparator means (MC1, MC2) and a zero reset input controlled by the output of the first comparator (MC1), and
—a second flip-flop circuit (ML2) controlled by the output of the first flip-flop (ML1) and providing a logic signal representing the characters scanned.

7. An apparatus according to one of the preceding claims, furthermore comprising electronic means (DT) adapted to carry out a commercial transaction and printing means (DILC) and logic control means (ULC) characterised in that the logic control means (ULC) are adapted to provide, after execution of a commercial transaction (DT), a sequence of commands adapted to scan optical-magnetic characters on a cheque and to print the amount of the transaction on this cheque.

8. An apparatus according to claim 7, characterised in that the printing on the cheque is carried out by columns according to a special character system.

9. An apapratus according to one of claims 7 and 8, characterised in that the logic control means (ULC) also control the printing of a client ticket (TCL) and a trader journal (JCO).

10. An apparatus according to one of claims 7 to 9, characterised in that the logic control means (ULC) are furthermore adapted to present jointly to a local memory (ML) or remote memory (MD) electrical signals representing jointly characters scanned on the cheque and characteristics of the transaction, which makes it possible to simplify bank processing of cheques.

EP 0 168 280 B1

**FIG. 1**

```
                          ┌─────── ULC
          ┌───────────────────────────────┐
          │   UNITE  LOGIQUE              │
          │   DE  COMMANDE               │
     DT   ├───────────────────────────────┤              ┌──── CO
CL ┐      │                              │          ┌─────────────┐
┌──────┐  │      DISPOSITIF              │          │             │
│      │  │         DE                   │◄─────────│ COMMERÇANT  │
│CLIENT│  │      TRANSACTION             │          │             │
│      │  │                              │          └─────────────┘
└──────┘  ├── TRANSACTION  VALIDEE ──────┤
TCL ┐     │                              │              ┌──── JCO
┌──────────┐│    DISPOSITIF              │          ┌─────────────┐
│IMPRESSION││    D'IMPRESSION            │─────────►│ IMPRESSION  │
│ TICKET   ││                           │          │  JOURNAL    │
│ CLIENT   ││      ET     DE            │          │ COMMERÇANT  │
└──────────┘│                           │          └─────────────┘
           CHEQUE                        │
SIGNATURE  IMPRIME                       │
           CHEQUE    LECTURE             │
           VIERGE    CARACTERES  CMC 7   │
          └───────────────────────────────┘
                       └── DILC
```

CARACTERISTIQUES DU CHEQUE (ET TRANSACTION) — CCT

MEMOIRE LOCALE (DISQUETTE, ETC...) — ML

MEMOIRE DISTANTE — MD

**FIG. 5**

TM 2, TM 20, TM 21, TM 22, TM 23

BLINDAGE

DLC

AA

FIG. 2

FIG. 3

EP 0 168 280 B1

FIG.4

## FIG. 6

FILTRAGE 12 VOLTS — FAL

DLC → +12V / -12V → +12V / -12V

AMPLIFICATION ANALOGIQUE ANTI_SATURATION — AA

DE
TM2
(FIG.5)

ALIMENTATION PRE_MAGNETISATION — APM

VERS
TM1
(FIG.3)

12V
0,12V

MC1
+12V MC11
0,46V MC12
MC15
MC14
MC10 COMP.
+12V MC13

ML 10
MC21
MC22
MC23
MC24
MC25
MC20 COMP. RAPIDE +
MC26 −6V +
+12V MC27
MC28

ML1 R E +12V D Q

ML 2
VALIDAT. CMC7
S Q E Q̄ D

ML 20 ADAPT. 5V. VALIDAT. LECT. CMC7

ML 21 ADAPT. 5V. CAR CMC7

MC 2

ML

EP 0 168 280 B1

FIG. 7

EP 0 168 280 B1

FIG. 8 A

FIG. 8 B

ENTREE AA       FIG. 9A

SORTIE AA       FIG. 9B

SORTIE MC1      FIG. 9C

V ( MC 23 )     FIG. 9D

SORTIE MC 20    FIG. 9E

SORTIE MC 26    FIG. 9F

SORTIE MC 28    FIG. 9G

SORTIE ML 1     FIG. 9H
SORTIE ML 2     FIG. 9 J

7